# EUROPEAN PATENT SPECIFICATION

(11) **EP 3 432 728 B1**
(45) Date of publication and mention of the grant of the patent: **08.10.2025**
(21) Application number: 17712127.4
(22) Date of filing: 20.03.2017
(51) Int. Cl.: A23K 20/189

(54) **ENZYME COMPOSITIONS**
ENZYMZUSAMMENSETZUNGEN
COMPOSITIONS ENZYMATIQUES

(30) Priority: 21.03.2016 GB 201604750
(43) Date of publication of application: 30.01.2019
(73) Proprietor: Huvepharma Eood, 1113 Sofia (BG)
(72) Inventor: OUTCHKOUROV, Nikolay, 4550 Peshtera (BG); PETKOV, Spas, 4550 Peshtera (BG)
(74) Representative: Gevers Patents
(86) International application number: PCT/EP2017/056598
(87) International publication number: WO 2017/162610

(56) References cited:
- WO-A1-2014/159185
- US-A1- 2003 118 472
- DATABASE WPI Week 200215, Derwent World Patents Index; AN 2002-109670, XP002769703

## Description

The present invention relates to enzyme compositions in a dry form and to the use of these enzyme compositions to prepare the enzyme compositions in liquid form.

### Background

The use of enzymes for treating animals is well known. Enzymes are often added to animal feeds to improve the digestibility and improve the nutritional value of feed stuffs, for example, by increasing the energy and/or nutrients available to the animal.

However, despite the numerous benefits enzymes have as feed additives, their use is limited and has a number of drawbacks. Enzymes are proteins and thus are sensitive to a number of environmental parameters, such as temperature and pH.

In the preparation of feed products, it is often desirable to be able to store enzyme solutions for periods of time prior to use. The environmental conditions required to store enzymes to maintain efficacy are often optimal conditions for growth of microbial organisms which can lead to contamination.

Extracted enzymes can often be unstable when not in their native environments e.g. cell compartment, extracellular fluid, and may not function properly or remain soluble if the optimum conditions are not maintained. For example, activity may be lost as a result of proteolysis or aggregation. Shelf lives can vary from a few days to more than a year and is dependent on the nature of the enzyme and the storage conditions used.

In general, liquid enzymes are inherently less stable than enzymes in granular or dry form. An aqueous environment also introduces significant risks of microbial proliferation. The stability and risks are further increased when different enzymes are mixed together for storage.

Storage at room temperature commonly results in protein degradation and/or enzyme inactivity after as little as a few hours, for example, due to microbial growth, hydrolysis or proteolytic degradation.

Storage at a reduced temperature, e.g. around 4 °C is known in the art to increase shelf life, however, microbial and proteolytic degradation is still common and often unavoidable. Moreover, storing larger amounts of liquid enzymes at a low temperature involves relatively high costs both for infrastructure and cooling energy.

Lyophilisation of enzymes (usually by freezing) is also used on some occasions and provides a much longer storage life with minimal degradation.

Protein stabilising solutions and additives are also known to increase storage stability and extend shelf life of enzyme solutions. Anti-microbial agents such as sodium azide (NaN₃) are also known, however, these often also cause damage to the structure of the enzyme and thus inhibit activity. Furthermore, NaN₃ is acutely toxic and not suitable for subsequent feed applications.

CN 101617740 discloses a liquid phytase formulation that is intended to be sprayed onto a pelletized animal feed. A liquid formulation was preferred since solid formulations, in the form of powders, granules or pills, had to be added to the feed before the pelletizing process. However, during the pelletizing process, the feed is subjected to higher temperatures, in particular to temperatures higher than 70°C, so that the phytase enzyme loses at least part of its activity. As a matter of fact, the phytase enzyme which is commonly used in animal feed starts to lose its activity already as from a temperature of 60°C.

A drawback of liquid phytase formulations is their reduced storage stability compared to dry phytase formulations. To increase the storage stability of the liquid formulations, CN 101617740 discloses to add polyethylene glycol to protect the enzyme molecule and a stabilizer, in particular trehalose, to increase the osmotic pressure of the solution to stabilize the enzyme. Sodium benzoate was moreover added as preservative and the pH of the solution was buffered at a pH between 4.5 and 5. By these additives, the loss of activity of the enzyme was reduced from -40% to -10% when stored for 6 months at room temperature and from -40% to -17% when stored for 6 weeks at a temperature of 40°C.

A drawback of the liquid formulations disclosed in CN 101617740 is that quite a lot of additives have to be used, namely for example per 1000 kg solution about 30 kg of polyethylene glycol, 50 kg trehalose, 0.5 kg sodium benzoate and 20 kg 0.5M HCI. In general, a drawback of liquid enzyme formulations is that they have to be stored under cool conditions (even when stored under cool conditions their storage stability is lower than for dry formulations) and much larger volumes of enzyme solutions need to be stored, handled and transported compared to dry formulations. Notwithstanding these drawbacks, preference was given in CN 101617740 to liquid formulations in view of the loss of enzyme activity when mixing dry enzyme formulations prior to the pelletizing process to the feed formulation.

WO 2014/159185 also discloses a liquid enzyme formulation which can be sprayed on feed pellets and a granulated enzyme formulation which can be mixed with the feed before being pelletized. The liquid enzyme formulation comprises a phytase, a buffer, a stabilizer, in particular trehalose, and an anti-microbial, in particular sodium benzoate. The granulated enzyme formulation comprises amongst others a carrier and a phytase. The carrier comprises for example a flour or a starch and is thus not soluble in water, especially not at a low temperature of for example at 20°C, i.e. at a temperature which doesn't deactivate the enzyme.

There is therefore a need for a new and improved enzyme composition which can be sprayed onto the feed but which doesn't show the drawbacks of the known liquid enzyme formulations as to storage stability, storage conditions and the large amounts of water which need to be stored, transported and handled.

### Summary

According to the present invention, as seen from a first aspect, there is provided an enzyme composition as defined in claim 1 comprising one or more water-soluble feed enzymes, a salt of benzoic acid and a weak acid, which enzyme composition is in a dry form, is soluble in distilled water at a temperature of 20°C in an amount of 10 g/l to provide the enzyme composition in liquid form, the liquid enzyme composition being buffered by the weak acid present in the enzyme composition in dry form to a pH of 5 or less.

Due to the fact that the enzyme composition is in a dry form, it has a good storage stability which is even better than the known stabilized solutions. It can moreover be stored in a more compact space, under less controlled storage conditions, and due to the smaller weight and volume thereof, it can be transported and handled more easily. The enzyme composition is readily dissolvable in water so that it can be dissolved easily in water just before being be sprayed onto the feed. Since it has only to be stored for a short period of time in liquid form, for example for less than one week or even for less than one day (24 hours), the enzyme activity is not lost, or nearly not lost, during this storage period, even not when the liquid is stored at higher temperatures, for example at temperatures higher than 20°C. No stabilizers therefore have to be provided in the enzyme formulation, especially not in the water soluble dry formulation, which would make it much more difficult to produce a completely water soluble dry formulation wherein the enzyme remains stable.

Due to the relatively low pH of the liquid formulation obtained by dissolving the dry formulation in water, the benzoate salt is partly converted to the anti-microbially active acid form. The liquid formulation is buffered to the defined pH values by the presence of the weak acid and the conjugated salt of that weak acid which has been formed by reaction of the weak acid with the salt of the benzoic acid.

In some embodiments, the salt of benzoic acid may comprise sodium benzoate.

According to the present invention, the enzyme composition comprises said benzoic acid salt in an amount of at least 5.0 wt.% and less than 15 wt.%, more preferably in an amount of less than 10 wt.%.

In some embodiments, the liquid enzyme composition may be buffered by the weak acid present in the water soluble enzyme composition to a pH of 4.5 or less. The pH of the liquid composition may be between pH 4.3 and pH 4.5.

According to the present invention, the feed enzyme is present in the dry feed composition in an amount of at least 85 wt. %.

The feed enzyme may comprise one or more enzymes selected from the group consisting: phytase, xylanase, glucanase, amylase, protease, galactosidase, cellulose, carbohydrase, hemicellulose, lipase and xyloglucanase. In an embodiment, the enzyme comprises phytase, in particular a phytase which works optimally at a pH below 4. In another embodiment, the enzyme comprises xylanase and preferably cellulose and/or hemicellulose.

In some embodiments, the enzyme composition may be in the form of a water soluble powder. In other embodiments, the enzyme composition may be in the form of water soluble granules.

According to the present invention, the dry enzyme composition is completely soluble in distilled water at a temperature of 20°C in an amount of 10 g/l.

The water soluble powder is preferably free flowing. It may contain an anti-caking agent, in particular silica. The silica may be present in the dry formulation in an amount of between 1 and 3 wt.%, preferably in an amount of about 2 wt.%.

In some embodiments, the weak acid may comprise citric acid, in particular citric acid monohydrate.

According to the present invention, as seen from a second aspect, there is provided a method for the preparation of an enzyme composition in liquid form as defined in claim 13, wherein the water dissolvable enzyme composition according to the first aspect of the invention is dissolved in water.

In some embodiments, the liquid enzyme composition is admixed with an animal feed within less than one week, preferably within less than one day after being prepared.

In some embodiments, the benzoate and benzoic acid may be present in the liquid enzyme composition in an amount between about 0.01 wt.% and about 1.5 wt.%. In some embodiments, the benzoate and benzoic acid may be present in an amount between about 0.05 wt.% to about 0.15 wt.%.

Further described herein is a method for the preparation of a feed formulation, comprising the steps:
providing an enzyme composition according to the present invention in dry form;
optionally storing the composition for a period of time;
dissolving the dry enzyme composition in water;
spraying the dissolved enzyme composition onto a feed mixture, in particular onto feed pellets.

### Figures

The present invention is further described with reference to the accompanying figures of which:
**Figure 1** is a chart showing the enzyme activity of an enzyme composition according to the present invention comprising the feed enzyme phytase, at 0 (zero), 3 and 15 days after dissolution in water;
**Figure 2** is a chart showing the microbial count in the enzyme composition of Figure 1, at 0 (zero), 3 and 15 days after dissolution in water;
**Figure 3** is a chart showing the enzyme activity of an enzyme composition according to the present invention comprising the feed enzyme xylanase, at 0 (zero), 3 and 15 days after dissolution in water;
**Figure 4** is a chart showing the microbial count in the enzyme composition of Figure 3, at 0 (zero), 3 and 15 days after dissolution in water.

### Detailed Description

### Definitions

The term *"enzyme"* refers to a substance, e.g. a protein, which acts as catalyst to bring about a certain chemical change. For example, phytase, xylanase, glucanase, amylase, protease, galactosidase, cellulose, carbohydrase, hemicellulose, lipase.

The term *"feed enzymes"* or *"food enzymes"* refers to enzymes typically found in the digestive tracts of animals which may be specifically adapted for the breakdown or digestion of food or feed. For example, the enzyme phytase catalyses the hydrolysis of phytic acid which is commonly found in seeds and nuts. These enzymes can be obtained from natural or synthetic sources and may be grown *in vivo* or *in vitro.*

The term *"activity"* in relation to enzymes would be readily understood by those skilled in the art. For example, enzyme activity may refer to the amount that catalyzes the conversion of 1 micro mole of substrate per minute. Enzyme activity may be measured using a relevant standard e.g. ISO 30024:2009 for phytase activity. Relevant standard methods to measure the activity of alternative enzymes would be known in the art.

A change in enzyme activity, e.g. reduced enzyme activity, may be caused by factors such as pH, temperature, competitive or non-competitive inhibitors, and immobilisers. A significant change in enzyme activity in some cases may refer to a drop in enzyme activity below 50% of the original activity. According to some embodiments, enzyme activity below 50% of the original activity would constitute a significant change e.g. drop or reduction in enzyme activity. It would be appreciated that a significant change in enzyme activity would vary depending on, for example, the enzyme, the storage conditions and the intended use of the enzyme composition. It would also be appreciated that a significant change in enzyme activity i.e. below 50%, would still meet the requirements of enzyme activity of the compositions of the present invention in particular applications.

The term *"benzoate"* would be known to those skilled in the art and refers to the anion of the chemical formula C₇H₅O₂⁻ . The anion is commonly found in salts and esters of benzoic acid (C₆H₅COOH), for example, sodium benzoate.

The term *"buffer"* refers to one or more compounds that may resist changes in pH, whether acidic or basic. Buffers are commonly in the form of an aqueous solution comprising one or more weak acids and their corresponding conjugate bases. However, the buffer may be provided in a liquid (aqueous) form or in a dry form that may be added to a solution to buffer the pH. Suitable buffers comprise, for example, citrate, aconitate, acetate, succinate, maleate, phosphate, boric acid, carbonate etc. In an embodiment of the present invention, the buffer is citrate. Advantageously, citrate is safe, economical and can provide stable buffering for many different types of food and feed supplements.

The term *"feed formulation"* refers to a composition of feed or food. The amount of each ingredient in feed formulations are often quantified and selected in amounts suitable to the specific nutritional requirement. The ingredients may be combined to form a feed mixture.

The term *"functionality"* would be readily understood in relation to enzymes. For example, functionality may be expressed as the percentage functionality retained by the enzymes, for example, following storage.

The terms *"storage", "shelf life", "humidity"* in relation to enzymes would be readily understood by those skilled in the art. However, these may vary according to where the geographical location of the composition of the present invention.

The term *"temperature"* in relation to the enzyme compositions of the invention may refer to, for example, an incubation temperature, a testing temperature, a storage temperature. In some embodiments, the incubation temperature may be around 30 °C and the testing temperature e.g. for testing enzyme activity may be around 50 °C

The term *"microbial growth"* refers to the expansion, breeding, proliferation or propagation of a population of a microscopic organisms e.g. bacteria, fungi, viruses or algae.

The term *"controlling"* in relation to control of microbial growth refers to a change e.g. decrease or reduction in the growth or propagation of a population or rate of growth of said microbes, for example, as determined by ISO 4833-2:2013. Control of growth may also refer to a complete inhibition of growth or death of the microscopic organisms.

The term *"period of time"* would be understood to mean any length of time. For example, in relation to storage of enzyme compositions, in some embodiments the enzyme compositions may be stored for a period of time of one or more hours, one or more days or one or more weeks. In some embodiments, the enzyme compositions are stored for 1 day, for 3 days or for 15 days.

According to the present invention, as seen from a first aspect, there is provided an enzyme composition comprising one or more water-soluble feed enzymes, a salt of benzoic acid and a weak acid, which enzyme composition is in a dry form which is dissolvable in water to provide the enzyme composition in liquid form, the liquid enzyme composition being buffered by the weak acid present in the enzyme composition in dry form to a pH of 5 or less. The pH obtained when dissolving the dry enzyme composition in water is determined by dissolving 10 grams of the dry composition in 1 litre of distilled water at a temperature of 20°C. The enzyme composition is completely dissolvable in distilled water, at a temperature of 20°C, in an amount of 10 g/l.

Depending on the required concentration of the enzyme in the liquid formulation, the dry enzyme composition can be dissolved in different amounts in the water. In some embodiments, the dry enzyme composition is dissolved in an amount of at least 1 g, preferably at least 3 g, more preferably at least 5 g and most preferably at least 7 g per litre of water. In some embodiments, the dry enzyme composition is dissolved in an amount of at most 100 g, preferably at most 75 g, more preferably at most 50 g and most preferably at most 25 g per litre of water.

The dry enzyme compositions of the present invention display substantially no microbial growth and no significant change in enzyme activity when stored at room temperature for one year.

Furthermore, the enzyme compositions of the present invention are optimised and a balance between enzyme stability and enzyme functionality is achieved.

By following the teachings of the present invention, the activity of enzyme compositions may be maintained in storage in liquid form, i.e. after having been dissolved in water, at 20°C, for 3 or more days, for 5 or more day, for 10 or more days, for 15 or more days, for 20 or more days, with substantially reduced or no microbial contamination to the enzyme compositions.

An enzyme activity of 80% or more, 85% or more, 90% or more or 99% or more may be maintained when the enzyme compositions of the present invention are stored in liquid form, at 20°C, for 3 or more days, for 5 or more day, for 10 or more days, for 15 or more days, for 20 or more days, with substantially reduced or no microbial contamination to the enzyme compositions.

In some embodiments, the salt of benzoic acid comprises sodium or potassium benzoate.

In an embodiment, the salt of benzoic acid comprises sodium benzoate. It has surprisingly been found that the addition of sodium benzoate prevented or substantially reduced microbial growth in a dissolved enzyme product, without significantly reducing enzyme activity.

In some embodiments, the benzoate salt is present in the dissolved formulation an amount between about 0.01 wt.% and about 1.5 wt.%. The benzoate salt may be present in an amount between about 0.05 wt.% to about 1.1 wt.%. In an embodiment, the dissolved enzyme composition comprises about 0.1 wt.% benzoate salt. The benzoate salt may be present in an amount between about 0.9 wt.% and about 1.1 wt.%. In an embodiment, the enzyme composition comprises about 1 wt.% benzoate salt.

The recognised function of benzoates as antimicrobial agents is incorporated in the present invention. Furthermore, the functionality of benzoates may vary e.g. be reduced or enhanced, depending on the conditions, e.g. pH.

Benzoic acid in its undissociated form is an active antimicrobial agent. Benzoic acid is only slightly soluble in water and thus not suitable for being included in the dry formulation. Benzoates such as sodium benzoate are highly soluble and under acidic conditions, e.g. pH <5, convert to undissociated benzoic acid. Thus, in the present invention, the enzyme compositions are buffered to pH ≤5.

In some embodiments, the pH of the dissolved composition is about pH 5 or less. The pH of the dissolved composition is between about pH 4 to about pH 4.8. In an embodiment, the pH of the dissolved composition is between about pH 4.0 and 4.5, preferably between about pH 4.3 and 4.5. When the efficacy of different concentrations of 0.1 wt.% and 1 wt.% sodium benzoate in dissolved enzyme solutions were evaluated, it was found that a target pH ranging from 4.3 to 4.5 ensured optimal working of the enzyme and also the benzoate.

Under acidic conditions, in particular pH 4.5 or less, sodium benzoate is bacteriostatic, fungistatic and preservative. It is often used as a food additive with E number E211. Sodium benzoate has the chemical formula NaC₇H₅O₂ which is acceptable as an animal food additive or feed.

According to the present invention, the water soluble dry enzyme composition comprises said water-soluble feed enzymes in an amount of at least 85 wt.%.

In some embodiments, the feed enzyme may be present in an amount of at least 0.05 wt.% by weight of the final volume of the dissolved composition. In some embodiments, the feed enzyme may be present in an amount at least 0.5 wt.% in the dissolved enzyme composition.

In some embodiments, the enzyme may be present in the liquid composition in an amount between about 0.2 wt.% and about 10 wt.%. In some further embodiments the enzyme may be present in an amount between about 0.2 wt.% and about 5 wt.%. In other embodiments the enzyme may be present in an amount between about 0.2 wt.% and about 2 wt.%. The enzyme may also be present in an amount between about 0.2 wt.% and about 1 wt.%. In an embodiment, the composition comprises about 0.7 wt.% of the feed enzyme. The enzyme may be present in an amount between about 1 wt.% to about 2 wt.%. In an embodiment, the composition may comprise about 1.5 wt.% of the enzyme.

In alternative embodiments, the feed enzyme may be present in the liquid composition an amount between about 0.05 to about 1 wt.%, in an amount between about 0.5 wt.% to about 1 wt.%, in an amount 0.6 wt.% to about 0.8 wt.%.

In alternative embodiments, the feed enzyme may be present in the liquid composition in an amount between about 1 wt.% to about 2.5 wt.%, in an amount between about 1 wt.% to about 2 wt.% or in an amount between about 1.4 wt.% to about 1.6 wt.%.

It will be appreciated that the amount of enzyme present in the liquid composition would depend on its activity and the desired dosage.

The enzyme may be any suitable feed enzyme known in the art. The enzyme may comprise one or more enzymes selected from the group consisting: phytase, xylanase, glucanase, amylase, protease, galactosidase, cellulose, carbohydrase, hemicellulose, lipase and xyloglucanase. In an embodiment, the enzyme is phytase and/or xylanase. In one embodiment, the enzyme is phytase, xylanase or alpha-galactosidase or a combination thereof. In one embodiment, the enzyme is a phytase which works optimally at a pH below 4.0. Non-limiting examples of phytases working optimally at a pH below 4 are notably the commercially available 3- and 6-phytases.

For example, the enzyme composition of the present invention may be in the form of water soluble powder, granules, pellets freeze-dried, lyophilised or any other suitable dry form.

In some embodiments, the enzyme composition may be provided in liquid form, for example, the enzyme may be provided in a dissolved state by dissolving the dry enzyme composition in water.

According to the present invention, as seen from a second aspect, there is provided a method for the preparation of an enzyme composition in liquid form, wherein the water dissolvable enzyme composition according to the first aspect of the invention is dissolved in water. In some embodiments, the dry enzyme composition is dissolved in an amount of at least 1 g, preferably at least 3 g, more preferably at least 5 g and most preferably at least 7 g per litre of water. In some embodiments, the dry enzyme composition is dissolved in an amount of at most 100 g, preferably at most 75 g, more preferably at most 50 g and most preferably at most 25 g per litre of water.

In some embodiments, the liquid enzyme composition is admixed with an animal feed within less than one week, preferably within less than one day after being prepared. The activity of the enzyme is thus entirely or nearly entirely maintained, even when in the enzyme spraying station the temperature would be higher than room temperature.

The enzyme compositions of the present invention may be a component or ingredient in a feed formulation. The components of the enzyme

The liquid composition prepared by dissolving the dry composition in water can be stored for a period of time before being applied onto the feed. It would be appreciated that the period of time may be any suitable period of time that the enzyme composition may need to be stored prior to use, for example, from several minutes to one or several days or weeks. Preferably the enzyme activity of 80% or more, 85% or more, 90% or more or 99% or more may be maintained when the enzyme compositions of the present invention are stored at 20°C for 3 or more days, for 5 or more day, for 10 or more days, for 15 or more days, for 20 or more days, with substantially reduced or no microbial contamination to the enzyme compositions.

The feed formulation may be used for the preparation of an animal feed. The feed formulation may be prepared immediately before use or stored for a short period of time for example less than a week or less than one day or less than several hours without losing significant enzymatic activity and before admixing with the animal feed, in particular before spraying the liquid composition onto the animal feed.

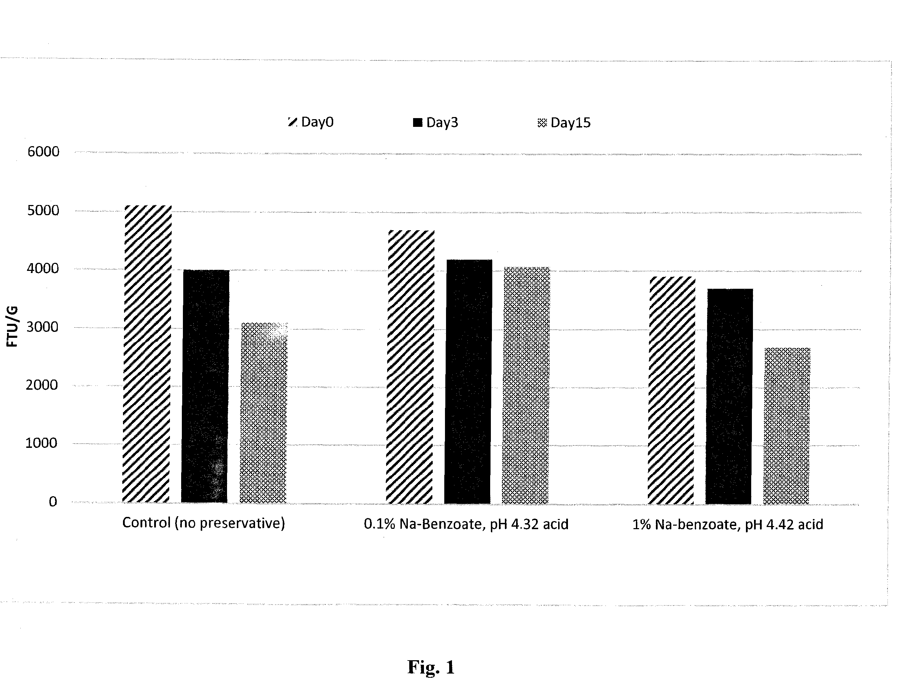

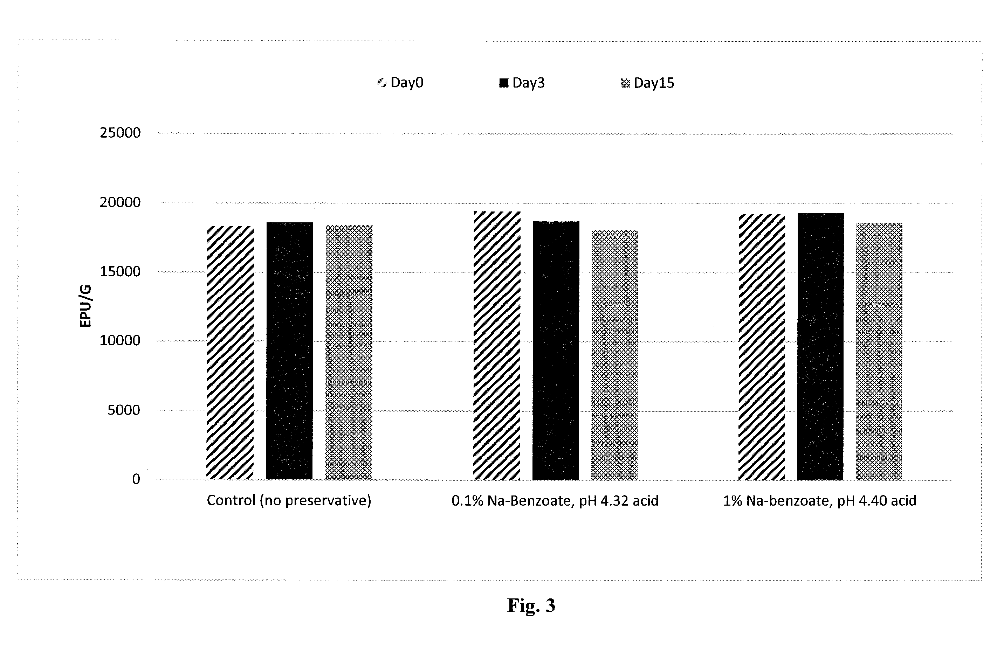

The enzyme composition according to the present invention may maintain a functionality, after being dissolved in water, of 50% or more, 60% or more, 70% or more, 80% or more when stored for a period of three days or more, one week or more, fifteen days or more, three weeks or more (see Figures 1 and 3).

The dissolved enzyme composition may maintain a functionality of 85% or more, a functionality of 90% or more, a functionality of 95% or more, a functionality of 99% or more when stored for a period of three days or more, one week or more, fifteen days or more, three weeks or more (see Figures 1 and 3).

The functionality of an enzyme is the ability to carry out its usual functions, for example, the function of phytase is to catalyse the hydrolysis of phytic acid. It would be appreciated that functionality of an enzyme is largely linked to the activity of the enzyme, thus reduced functionality of an enzyme would often be linked to a reduction in enzyme activity. It would be appreciated that there may be other factors that may also cause a decrease in enzyme functionality, for example, temperature, light, humidity.

Especially when dissolved in water, the enzyme compositions of the present invention display significantly reduced or substantially no microbial growth without significantly affecting enzyme activity.

It would be appreciated that microbial growth refers to growth of any microscopic organisms e.g. viruses, fungi, bacteria or algae. Control of growth may refer to a reduction in the growth or propagation of a population of a microscopic organisms, complete inhibition of growth or death of the microscopic organisms, or a level of control in this spectrum.

### Experimental

A method of preparing an enzyme composition according to the present invention will now be described.

### Method

Proprietary enzymes comprising phytase and xylanase were provided as water soluble powder or granules (WSP or WSG respectively). These enzymes were dissolved in a water tank of an instrument for preparing feed formulations at concentrations of 7 g/L (phytase) and 15 g/L (xylanase) respectively.

The efficacy of different concentrations of 0.1 wt.% and 1 wt.% sodium benzoate in the enzyme solutions was evaluated.

Water soluble pellets (WSP) of a proprietary phytase were dissolved in water at a concentration of 7 g/L and buffered to a pH between 4.3-4.5. Two test solutions were made up comprising 0.1 wt.% and 1 wt.% sodium benzoate respectively.

Water soluble pellets (WSP) of a proprietary xylanase were dissolved in water at a concentration of 15 g/L and buffered to a pH between 4.3-4.5. Two test solutions were made up comprising 0.1 wt.% and 1 wt.% sodium benzoate respectively.

Each enzyme solution was buffered between pH 4.3 and 4.5 using an appropriate amount of citric acid. It was found that a target pH ranging from 4.3 to 4.5 ensured optimal working of the enzyme and also the sodium benzoate.

In order to reproduce standard levels of microbial contamination found in feed mills and feed factories e.g. from dust formation, 0.1 grams of fine feed was added per litre of solution in each of the experiments. Total aerobic microbial count and enzyme activity was assayed at days 0 (zero), 3 and 15 after dissolving and incubating the enzyme compositions at 30 °C.

For phytase, enzyme activity was measured using the standard ISO 30024:2009 method (http://www.iso.org/iso/iso_catalogue/catalogue_tc/catalogue detail.htm? csnumber=45787). ISO 30024:2009 specifies the determination of phytase activity in feed samples and is validated exclusively for the determination of phytase activity and exclusively in complete feeds.

Aerobic microbial growth was measured using the standard ISO 4833-2:2013 method (http://www.iso.org/iso/catalogue_detail.htm?csnumber=59509). ISO 4833-2:2013 specifies a horizontal method for enumeration of microorganisms that are able to grow and form colonies on the surface of a solid medium after aerobic incubation at 30 °C. The method is applicable to products intended for human consumption or for animal feed, and environmental samples in the area of food and feed production and food handling.

For xylanase (endo-1,4-β-D-xylanase), enzyme activity was measured at pH of 4.7 and 50 °C using Xylazyme tablets from Magazyme. Xylanase activity is expressed in endo-pentosanase units (EPU). EPU units are calculated using endo-1,4-β-xylanase enzyme with known activity and method of standard additions. One EPU is the amount of enzyme which releases 0.0083 µmol of reducing sugars (xylose equivalent) per minute from oat spelt xylan at pH 4.7 and 50 °C.

### Results

Figure 1 shows the phytase activity in ftu/g (phytase units per gram) after dissolution and incubation at 30 °C for the time periods of 0 days, 3 days, and 15 days. The enzyme composition comprising 0.1% sodium benzoate retains the best activity at day 15.

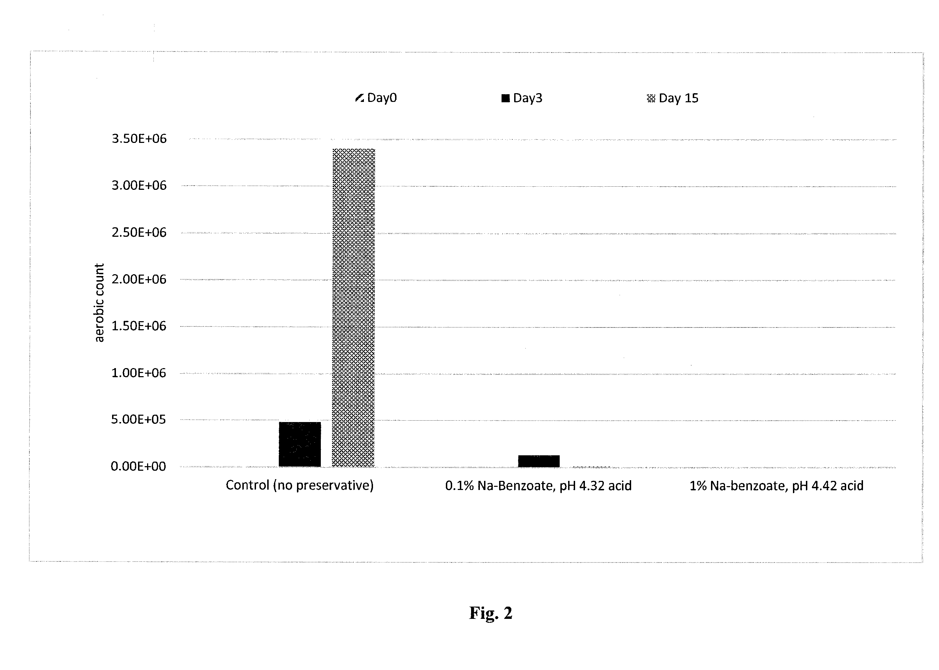

Figure 2 shows the aerobic microbial growth of the enzyme composition of Figure 1 at the same time periods. No microbial growth was seen in solutions containing 0.1% or 1% sodium benzoate.
Figure 3 shows xylanase activity in epu/g (xylanase units per gram) after dissolution and incubation at 30 °C for the time periods of 0 days, 3 days, and 15 days. The activity of the enzyme was not affected at 3 days or at 15 days by the presence of benzoate.

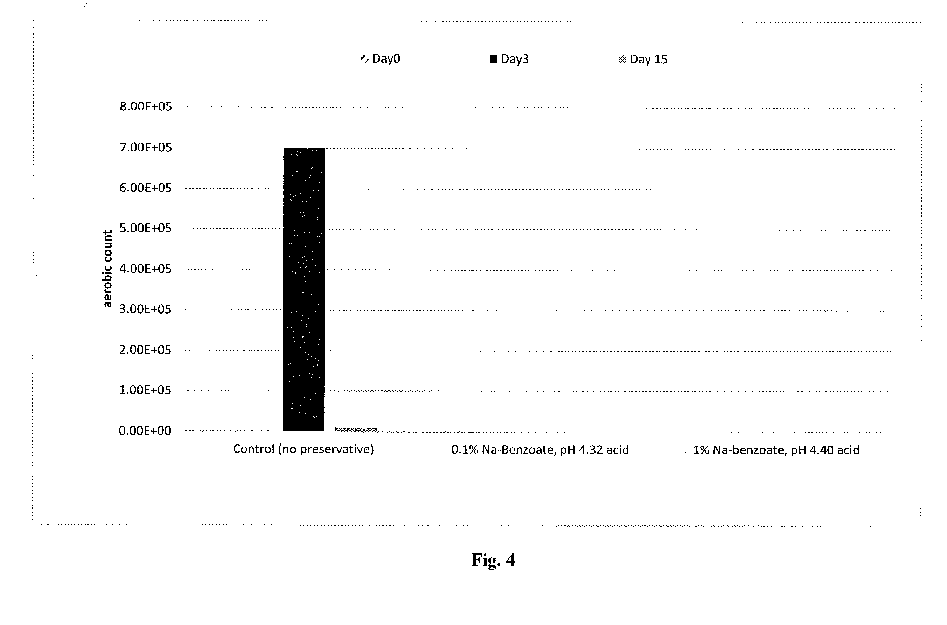

Figure 4 shows the aerobic microbial growth of the enzyme composition of Figure 3 at the same time periods. No microbial growth was seen in solutions containing 0.1 wt.% or 1 wt.% sodium benzoate. At day 15 the aerobic bacterial growth was also suppressed in the control. It is likely that this was caused by competitive inhibition due to fungal outgrowth which was apparent on top of the culture at day 15.

Thus, it was found that the enzyme compositions could be stored for at least 15 days in the water tanks before being applied and used in the preparation of feed formulations.

## Claims

1. An enzyme composition comprising one or more water-soluble feed enzymes in an amount of at least 85 wt.%, a salt of benzoic acid in an amount of at least 5.0 wt.% and less than 15 wt.% and a weak acid, which enzyme composition is in a dry form, is soluble in distilled water at a temperature of 20 °C in an amount of 10 g/l to provide the enzyme composition in liquid form, the liquid enzyme composition being buffered by the weak acid present in the enzyme composition in the dry form to a pH of 5 or less.

2. The enzyme composition according to claim 1, consisting of one or more water-soluble feed enzymes in an amount of at least 85 wt.%, a salt of benzoic acid in an amount of at least 5.0 wt.% and less than 15 wt.%, a weak acid, and optionally silica in an amount of between 1 and 3 wt.%, which enzyme composition is in a dry form, is soluble in distilled water at a temperature of 20 °C in an amount of 10 g/l to provide the enzyme composition in liquid form, the liquid enzyme composition being buffered by the weak acid present in the enzyme composition in the dry form to a pH of 5 or less.

3. The enzyme composition according to claim 2, consisting of one or more water-soluble feed enzymes in an amount of at least 85 wt.%, a salt of benzoic acid in an amount of at least 5.0 wt.% and less than 15 wt.%, a weak acid, and silica in an amount of between 1 and 3 wt.%, which enzyme composition is in a dry form, is soluble in distilled water at a temperature of 20 °C in an amount of 10 g/l to provide the enzyme composition in liquid form, the liquid enzyme composition being buffered by the weak acid present in the enzyme composition in the dry form to a pH of 5 or less.

4. The enzyme composition according to anyone of the claims 1 to 3, wherein, when dissolved in water, the liquid enzyme composition is buffered by the weak acid present in the water soluble enzyme composition to a pH of 4.5 or less.

5. The enzyme composition according to claim 4, wherein, when dissolved in water, the liquid enzyme composition is buffered by the weak acid present in the water soluble enzyme composition to a pH of between 4.0 and 4.5, preferably a pH of between 4.3 and 4.5.

6. The enzyme composition according to any one of the claims 1 to 5, wherein the enzyme composition is in the form of a water soluble powder.

7. The enzyme composition according to any one of the claims 1 to 6, wherein the enzyme composition is in the form of water soluble granules.

8. The enzyme composition according to any one of the claims 1 to 7, wherein the salt of benzoic acid comprises sodium benzoate.

9. The enzyme composition according to any one of the claims 1 to 8, wherein the feed enzyme comprises one or more from the group consisting of phytase, xylanase, glucanase, amylase, protease, galactosidase, cellulase, carbohydrase, hemicellulase and lipase.

10. The enzyme composition according to claim 9, wherein the feed enzyme comprises phytase, in particular a phytase which works optimally at a pH below 4.0.

11. The enzyme composition according to claim 9, wherein the feed enzyme comprises xylanase.

12. The enzyme composition according to any one of the claims 1 to 11, wherein said weak acid comprises citric acid, in particular citric acid monohydrate.

13. A method for the preparation of an enzyme composition in liquid form, wherein the water dissolvable enzyme composition according to any one of the claims 1 to 12 is dissolved in water.

14. The method according to the claim 13, wherein the liquid enzyme composition is admixed with an animal feed within less than one week, preferably within less than one day after being prepared.

## Patentansprüche

1. Eine Enzymzusammensetzung, welche ein oder mehrere wasserlösliche Futtermittelenzyme in einer Menge von mindestens 85 Gew.-%, ein Salz von Benzoesäure in einer Menge von mindestens 5,0 Gew.-% und weniger als 15 Gew.-% und eine schwache Säure umfasst, wobei diese Enzymzusammensetzung in einer trockenen Form vorliegt, in destilliertem Wasser bei einer Temperatur von 20 °C in einer Menge von 10 g/l löslich ist, um die Enzymzusammensetzung in flüssiger Form zu liefern, wobei die flüssige Enzymzusammensetzung durch die in der Enzymzusammensetzung in der trockenen Form vorhandene schwache Säure auf einen pH-Wert von 5 oder weniger gepuffert ist.

2. Die Enzymzusammensetzung nach Anspruch 1, welche aus einem oder mehreren wasserlöslichen Futtermittelenzymen in einer Menge von mindestens 85 Gew.-%, einem Salz von Benzoesäure in einer Menge von mindestens 5,0 Gew.-% und weniger als 15 Gew.-%, einer schwachen Säure, und optional Siliciumdioxid in einer Menge von zwischen 1 und 3 Gew.-% besteht, wobei diese Enzymzusammensetzung in einer trockenen Form vorliegt, in destilliertem Wasser bei einer Temperatur von 20 °C in einer Menge von 10 g/l löslich ist, um die Enzymzusammensetzung in flüssiger Form zu liefern, wobei die flüssige Enzymzusammensetzung durch die in der Enzymzusammensetzung in der trockenen Form vorhandene schwache Säure auf einen pH-Wert von 5 oder weniger gepuffert ist.

3. Die Enzymzusammensetzung nach Anspruch 2, welche aus einem oder mehreren wasserlöslichen Futtermittelenzymen in einer Menge von mindestens 85 Gew.-%, einem Salz von Benzoesäure in einer Menge von mindestens 5,0 Gew.-% und weniger als 15 Gew.-%, einer schwachen Säure, und Siliciumdioxid in einer Menge von zwischen 1 und 3 Gew.-% besteht, wobei diese Enzymzusammensetzung in einer trockenen Form vorliegt, in destilliertem Wasser bei einer Temperatur von 20 °C in einer Menge von 10 g/l löslich ist, um die Enzymzusammensetzung in flüssiger Form zu liefern, wobei die flüssige Enzymzusammensetzung durch die in der Enzymzusammensetzung in der trockenen Form vorhandene schwache Säure auf einen pH-Wert von 5 oder weniger gepuffert ist.

4. Die Enzymzusammensetzung nach irgendeinem der Ansprüche 1 bis 3, wobei, wenn aufgelöst in Wasser, die flüssige Enzymzusammensetzung durch die in der wasserlöslichen Enzymzusammensetzung vorhandene schwache Säure auf einen pH-Wert von 4,5 oder weniger gepuffert ist.

5. Die Enzymzusammensetzung nach Anspruch 4, wobei, wenn aufgelöst in Wasser, die flüssige Enzymzusammensetzung durch die in der wasserlöslichen Enzymzusammensetzung vorhandene schwache Säure auf einen pH-Wert von zwischen 4,0 und 4,5, bevorzugt einen pH-Wert von zwischen 4,3 und 4,5 gepuffert ist.

6. Die Enzymzusammensetzung nach irgendeinem der Ansprüche 1 bis 5, wobei die Enzymzusammensetzung in Form eines wasserlöslichen Pulvers vorliegt.

7. Die Enzymzusammensetzung nach irgendeinem der Ansprüche 1 bis 6, wobei die Enzymzusammensetzung in Form eines wasserlöslichen Granulats vorliegt.

8. Die Enzymzusammensetzung nach irgendeinem der Ansprüche 1 bis 7, wobei das Salz von Benzoesäure Natriumbenzoat umfasst.

9. Die Enzymzusammensetzung nach irgendeinem der Ansprüche 1 bis 8, wobei das Futtermittelenzym einen oder mehrere der Bestandteile aus der Gruppe bestehend aus Phytase, Xylanase, Glukanase, Amylase, Protease, Galaktosidase, Cellulase, Carbohydrase, Hemicellulase und Lipase umfasst.

10. Die Enzymzusammensetzung nach Anspruch 9, wobei das Futtermittelenzym Phytase umfasst, insbesondere eine Phytase, die bei einem pH-Wert von unter 4,0 optimal wirkt.

11. Die Enzymzusammensetzung nach Anspruch 9, wobei das Futtermittelenzym Xylanase umfasst.

12. Die Enzymzusammensetzung nach irgendeinem der Ansprüche 1 bis 11, wobei die schwache Säure Citronensäure umfasst, insbesondere Citronensäure-Monohydrat.

13. Ein Verfahren zur Zubereitung einer Enzymzusammensetzung in flüssiger Form, wobei die wasserlösliche Enzymzusammensetzung nach irgendeinem der Ansprüche 1 bis 12 in Wasser aufgelöst wird.

14. Das Verfahren nach Anspruch 13, wobei die flüssige Enzymzusammensetzung einem Tierfuttermittel innerhalb von weniger als einer Woche, bevorzugt innerhalb von weniger als einem Tag nach der Zubereitung zugemischt wird.

## Revendications

1. Composition enzymatique comprenant une ou plusieurs enzymes alimentaires hydrosolubles en une quantité d'au moins 85 % en poids, un sel d'acide benzoïque en une quantité d'au moins 5,0 % en poids et inférieure à 15 % en poids et un acide faible, laquelle composition enzymatique se présente sous forme sèche, est soluble dans l'eau distillée à une température de 20 °C en une quantité de 10 g/l pour fournir la composition enzymatique sous forme liquide, la composition enzymatique liquide étant tamponnée par l'acide faible présent dans la composition enzymatique sous forme sèche à un pH inférieur ou égal à 5.

2. Composition enzymatique selon la revendication 1, consistant en une ou plusieurs enzymes alimentaires hydrosolubles en une quantité d'au moins 85 % en poids, un sel d'acide benzoïque en une quantité d'au moins 5,0 % en poids et inférieure à 15 % en poids, un acide faible, et éventuellement de la silice en une quantité comprise entre 1 et 3 % en poids, ladite composition enzymatique étant sous forme sèche, soluble dans l'eau distillée à une température de 20 °C en une quantité de 10 g/l afin de fournir une composition enzymatique sous forme liquide, la composition enzymatique liquide étant tamponnée par l'acide faible présent dans la composition enzymatique sèche à un pH inférieur ou égal à 5.

3. Composition enzymatique selon la revendication 2, consistant en une ou plusieurs enzymes alimentaires hydrosolubles en une quantité d'au moins 85 % en poids, un sel d'acide benzoïque en une quantité d'au moins 5,0 % en poids et inférieure à 15 % en poids, un acide faible, et de la silice en une quantité comprise entre 1 et 3 % en poids, laquelle composition enzymatique se présente sous forme sèche, est soluble dans l'eau distillée à une température de 20 °C en une quantité de 10 g/l afin de fournir une composition enzymatique sous forme liquide, la composition enzymatique liquide étant tamponnée par l'acide faible présent dans la composition enzymatique sous forme sèche à un pH inférieur ou égal à 5.

4. Composition enzymatique selon l'une quelconque des revendications 1 à 3, dans laquelle, lorsqu'elle est dissoute dans l'eau, la composition enzymatique sous forme liquide est tamponnée par l'acide faible présent dans la composition enzymatique soluble dans l'eau à un pH inférieur ou égal à 4,5.

5. Composition enzymatique selon la revendication 4, dans laquelle, lorsqu'elle est dissoute dans l'eau, la composition enzymatique sous forme liquide est tamponnée par l'acide faible présent dans la composition enzymatique hydrosoluble à un pH compris entre 4,0 et 4,5, de préférence à un pH compris entre 4,3 et 4,5.

6. Composition enzymatique selon l'une quelconque des revendications 1 à 5, dans laquelle la composition enzymatique se présente sous la forme d'une poudre soluble dans l'eau.

7. Composition enzymatique selon l'une quelconque des revendications 1 à 6, dans laquelle la composition enzymatique se présente sous la forme de granulés solubles dans l'eau.

8. Composition enzymatique selon l'une quelconque des revendications 1 à 7, dans laquelle le sel de l'acide benzoïque comprend du benzoate de sodium.

9. Composition enzymatique selon l'une quelconque des revendications 1 à 8, dans laquelle l'enzyme alimentaire comprend une ou plusieurs enzymes du groupe suivant comprenant les éléments suivants : phytase, xylanase, glucanase, amylase, protéase, galactosidase, cellulase, carbohydrase, hémicellulase et lipase.

10. Composition enzymatique selon la revendication 9, dans laquelle l'enzyme alimentaire comprend la phytase, en particulier une phytase qui fonctionne de manière optimale à un pH inférieur à 4,0.

11. Composition enzymatique selon la revendication 9, dans laquelle l'enzyme alimentaire comprend la xylanase.

12. Composition enzymatique selon l'une quelconque des revendications 1 à 11, dans laquelle ledit acide faible comprend l'acide citrique, en particulier l'acide citrique monohydraté.

13. Procédé de préparation d'une composition enzymatique sous forme liquide, dans lequel la composition enzymatique soluble dans l'eau selon l'une des revendications 1 à 12 est dissoute dans l'eau.

14. Procédé selon la revendication 13, dans lequel la composition enzymatique liquide est mélangée à une alimentation animale dans un délai inférieur à une semaine, de préférence dans un délai inférieur à un jour après sa préparation.
